# EUROPÄISCHE PATENTSCHRIFT

(11) **EP 1 037 031 B1**
(45) Veröffentlichungstag und Bekanntmachung des Hinweises auf die Patenterteilung: **19.02.2003**
(21) Anmeldenummer: 00104671.3
(22) Anmeldetag: 03.03.2000
(51) Int. Cl.: G01M 17/02

(54) **Reifenprüfverfahren und -Vorrichtung**
Procedure and device for testing tyres
Procédé et dispositif d'essai de pneus

(30) Priorität: 17.03.1999 DE 19911913
(43) Veröffentlichungstag der Anmeldung: 20.09.2000
(73) Patentinhaber: Beissbarth GmbH, 80993 München (DE)
(72) Erfinder:
(74) Vertreter: Kirschner, Klaus Dieter, Dipl.-Phys.

(56) Entgegenhaltungen:
- EP-A- 0 884 574

## Beschreibung

Die Erfindung betrifft ein Reifenprüfverfahren, bei dem vor und nach einer Änderung im Reifendruck mit kohärenter Strahlung jeweils ein Interferogramm einer Reifenoberfläche erzeugt wird und aus dem Interferogramm die Informationen über vorhandene Defekte des Reifens gewonnen werden, sowie eine Vorrichtung zur Durchführung des Verfahrens.

Aus der DE 42 31 578 A1 ist ein Verfahren zur Ermittlung der Strukturfestigkeit von Reifen bekannt, bei dem der Reifen mit kohärentem Licht beleuchtet wird, die vom Reifen zurückgestreute Strahlung in einem Zweistrahlinterferometer in zwei Teilstrahlen aufgeteilt wird, in dem Zweistrahlinterferometer eine der beiden Teilstrahlungen gegen die andere Teilstrahlung verkippt wird (Shearing), in dem Zweistrahlinterferometer eine der beiden Teilstrahlungen schrittweise phasenverschoben wird, die von dem Prüfobjekt zurückgestreute und in dem Zweistrahlinterferometer in die zwei Teilstrahlungen aufgeteilte und wieder zusammengeführte Strahlung durch die Oberfläche des Reifens abbildende Komponenten mit großer Öffnung einem elektronischen Bildsensorsystem zugeführt wird und die von dem Bildsensorsystem abgegebenen Signale digitalisiert und in einem Bildverarbeitungssystem zu einem Modulo-2π-Bild weiterverarbeitet werden und das Modulo-2π-Bild zu einem Ausgangs-Grauwertbild bestätigt wird.

Gemäß der DE 195 01 073 A1 wird das oben erwähnte Verfahren dadurch weitergebildet, daß das Ausgangs-Grauwertbild in der Weise partiell differenziert wird, daß ein zweites dem Ausgangs-Grauwertbild gleiches Grauwertbild erzeugt wird und dieses gegen das Ausgangs-Grauwertbild in Shearing-Richtung geometrisch verschoben und um einen über den gesamten Bildbereich konstanten Grauwert verändert wird und das so manipulierte Zweit-Grauwertbild von dem Ausgangs-Grauwertbild subtrahiert wird, und damit ein resultierendes Grauwertbild entsteht, an dem gegebenenfalls vorhandene Defekte eines Reifens erkennbar sind.

Wenn man bedenkt, daß Strukturschäden in den Reifen, insbesondere in der Karkasse einschließlich Gürtel, bei PKW-Reifen die Fahrsicherheit des Kraftfahrzeuges wesentlich beeinträchtigen können, ist es wünschenswert eine Reifenprüfung in regelmäßigen Abständen durchzuführen.

Aus der EP 0 884 574 ist ein Reifenprüfverfahren bekannt, bei dem vor und nach einer Änderung im Reifendruck mit kohärenter Strahlung jeweils ein Interferogramm der Reifenoberfläche erzeugt wird und bei dem aus dem Interferogramm die Informationen über vorhandene Defekte des Reifens gewonnen werden. Zur Prüfung eines Reifens wird das Rad, das den zu prüfenden Reifen aufweist, auf einer Wuchtmaschine montiert. Ein an der Wuchtmaschine angeordneter Prüfkopf wird zur Aufnahme der Interferogramme an den Reifen bis auf einen vorgegebenen Prüfabstand herangefahren. Auf einem ersten Prüfsegment des Reifens wird die Überprüfung auf Defekte vorgenommen. Dann wird das Rad durch die Wuchtmaschine um den Betrag eines Prüfsegmentes weitergedreht, und die zuletztgenannten Schritte werden wiederholt, bis der gesamte Reifen überprüft ist. Die Reifenprüfvorrichtung weist eine Wuchtmaschine, auf der das Rad, das den zu prüfenden Reifen aufweist, montierbar ist, eine Positionierungseinrichtung für einen Prüfkopf, mit der der Prüfkopf zur Aufnahme der Interferogramme an den Reifen bis auf einen vorgegebenen Prüfabstand heranzufahren ist, und eine Steuereinrichtung für die Wuchtmaschine auf, um das Rad um den Betrag eines Prüfsegmentes weiterzudrehen, wenn die Prüfung des vorhergehenden Prüfsegmentes abgeschlossen ist.

Da die Kosten für den Prüfkopf wesentlich von der Fläche ab hängen, die mit einem Meßgang erfaßt werden kann, ist an dem vorgenannten Verfahren vorteilhaft, daß die Kosten für den Prüfkopf wesentlich dadurch gesenkt werden, daß eine segmentweise Abtastung des Reifens vorgesehen ist, in dem mehrere Prüfsegmente des Reifens nacheinander in das Blickfeld des Prüfkopfes gebracht werden. Andererseits sind die erforderlichen Investitionen höher als nötig, wenn der Anwender nur eine Reifenprüfvorrichtung jedoch keine Wuchtmaschine benötigt.

Der Erfindung liegt die Aufgabe zugrunde, eine Reifenprüfverfahren und eine Vorrichtung bereitzustellen, die mit möglichst einfachen Mittel eine Reifenprüfung gestattet.

Zu diesem Zweck sieht das erfindungsgemäße Verfahren vor, daß zur Prüfung eines Reifens das Rad, das den zu prüfenden Reifen aufweist, auf einer dregbaren Welle einer Reifenprüfvorrichtung montiert wird, daß der Abstand des Reifens von dem Prüfkopf dadurch eingestellt wird, daß das Rad mit der Welle in Richtung der Welle verschoben und die Welle dann arretiert wird, daß die relative Lage des Prüfkopfes zu dem Reifen dadurch eingestellt wird, daß der Prüfkopf, um denselben für unterschiedlich große Reifen in Position zu bringen, in senkrechter Richtung bewegt wird, daß das Rad dann von Hand um den Betrag eines Prüfsegmentes weitergedreht und mechanisch arretiert wird, wenn das nächste Segment sich in Prüfposition vor dem Prüfkopf befindet, daß die Überprüfung auf Defekte auf einem ersten Prüfsegment des Reifens vorgenommen wird, und daß die beiden letztgenannten Schritt wiederholt werden, bis der gesamte Reifen geprüft ist.

Eine Einsparung an Geräteaufwand ergibt sich dadurch, daß das Rad von Hand gedreht wird. Dabei muß jedoch dafür gesorgt werden, daß das Rad genau um ein Segment weitergedreht wird, da sonst die Lage der ermittelten Defekte nicht hinreichend genau ermittelt werden kann, und daß der Prüfkof genau relativ zu dem Reifen positioniert wird. Dies wird aber durch die Art der Einstellung der Maschine und die mechanische Arretierung der Welle mit dem Rad sichergestellt. Durch solch ein einfaches Bewegungsschema kann der Prüfkopf einfach und ohne weitere Mittel an der korrekten Testposition angeordnet werden.

Gemäß einer vorteilhaften Ausgestaltung des Verfahrens wird die relative Lage des Prüfkopfes zu dem Reifen dadurch eingestellt, daß der Prüfkopf in sektrechter Richtung und senkrecht zu der Längsrichtung der Welle bewegt wird. Dadurch ergeben sich Vorteile bei der Integration des Prüfkopfes in die Reifenprüfvorrichtung, und die Verstellung des Prüfkopfes kann von oben, das heißt von der Konsole des Gerätes aus, durchgeführt werden.

Gemäß einer vorteilhaften Ausgestaltung des Verfahrens wird das Blickfeld des Prüfkopfes mit einer Kamera überwacht, die an dem Prüfkopf angeordnet und auf den Reifen gerichtet ist, wobei das von der Kamera aufgenommene Bild an dem Monitor dargestellt wird. Damit kann ohne weiteres festgestellt werden, wenn der Prüfkopf sich in der richtigen Position gegenüber dem Reifen befindet, und es sind keine weiteren Messungen erforderlich, um dies festzustellen. Vorteilhaft ist dabei auch, daß der bereits vorhandene Monitor auch für diese Aufgabe genutzt werden kann.

Gemäß einer weiteren vorteilhaften Ausgestaltung des Verfahrens werden die für die Weiterdrehung des Rades erforderlichen Größen, beispielsweise die Reifengröße, in den Rechner eingegeben, und der Rechner gibt eine Infomation über die Zahl der Segmente aus, die erforderlich sind, um den ganzen Reifen zu prüfen. Wenn die Größen in Form einer Tabelle abgelegt werden, kann diese Tabelle durch die Handeingaben laufend ergänzt werden, so daß in vorteilhafter Weise der Aufwand bei dem Einrichten für eine Prüfung immer weniger wird.

Eine weitere vorteilhafte Ausgestaltung des erfindungsgemäßen Verfahrens ist dadurch gekennzeichnet, daß die Zahl der erforderlichen Segmente an der Welle eingestellt wird. Diese Einstellung erfolgt somit von Hand unter Ausnutzung der von dem Rechner gegebenen Information. Damit kann die entsprechende Einstellung mit minimalem Geräteaufwand durchgeführt werden.

Eine weitere vorteilhafte Ausgestaltung des erfindungsgemäßen Verfahrens ist dadurch gekennzeichnet, daß bei dem Einstellen des Abstandes zwischen dem Prüfkopf und dem Reif diese Abstand überwacht und eine Anzeige gegeben wird, wenn der Prüfkopf den Sollabstand erreicht hat, und daß der Prüfkopf dann arretiert wird. Damit ist eine sichere, schnelle und genaue Einstellung des Prüfkopfes auf den Reifen möglich.

Eine weitere vorteilhafte Ausgestaltung des erfindungsgemäßen Verfahrens ist dadurch gekennzeichnet, daß der Reifendruck für jeden Testschritt reduziert wird, wobei nach dem Beenden des Testens dieser zurückgeführt wird auf den Nominal- oder Nenndruck. Mittels diesem Verfahren kann die Veränderung dieses Reifendruckes während eines gesamten Testzyklus, bei welchem die Testsektoren nacheinander gemessen werden, durchgeführt werden bei minimalem Zeitverlust, da die Druckveränderung von dem ersten Testschritt zu einem zweiten Testschritt beginnt bei dem Enddruck, welcher an dem Ende des ersten Testschrittes vorliegt. Desweiteren muß nach jeder Druckveränderung der Reifen für eine gewisse Zeit ruhen, sodaß die Testergebnisse nicht beeinflußt werden durch fortlaufende Bewegungen, die durch die Druckveränderung bedingt sind. Daher wird die eingenommene Zeit für solch eine Wiederherstellungs- bzw. Ruhezeit minimiert, wenn die Anzahl an Druckveränderungen, während einem Testzyklus erfolgen, auf ein Minimum gebracht ist. Die Anzahl an Wiederherstellungs- bzw. Ruhezeitperioden würde ansteigen, wenn der Reifendruck nach jedem Reifentestschritt bezüglich eines spezifischen Abschnittes des Reifens auf Nominaldruck gebracht wird.

Zur Lösung der gestellten Aufgabe ist die erfindungsgemäße Reifenprüfvorrichtung mit einer Luftdruckeinrichtung zur Änderung des Reifendrucks sowie einem Prüfkopf und einem Rechner, die vor und nach einer Änderung im Luftdruck mit kohärenter Strahlung jeweils ein Interferogramm der Reifenoberfläche erzeugen und aus dem Interferogramm die Informationen über vorhandene Defekte des Reifens ermitteln, gekennzeichnet durch eine dregbar gelagerte Welle, auf der das Rad mit dem zu prüfenden Reifen zu montieren ist, durch eine Lagereinrichtung, durch die das Rad mit der Welle in Längsrichtung der Welle zu verschieben ist, durch eine Wellen-Arretierungseinrichtung, durch die die Welle dann in Bezug auf ihre Bewegung in Längsdrichtung der Welle zu arretieren ist, durch eine Führungseinrichtung, durch der Prüfkopf in radialer Richtung des Rades zu bewegen ist, durch eine Rad-Arretierungseinrichtung, durch die das Rad mechanisch zu arretieren ist, wenn das Rad von Hand um den Betrag eines Prüfsegmentes weitergedreht ist und wenn das nächste Segment sich in Prüfposition vor dem Prüfkopf befindet, und durch eine Starteinrichtung, durch die die Überprüfung auf Defekte auf einem ersten Prüfsegment des Reifens gestratet wird.

Eine vorteilhafte Ausführungsform der erfindungsgemäßen Reifenprüfvorrichtung ist dadurch gekennzeichnet, daß der Rechner einen Speicher umfaßt, in dem eine Tabelle abgelegt ist, die Angaben über die Zahl der Segmente umfaßt, die für die Weiterdrehung des Rades in Abhängigkeit von der Größe des Rades erforderlich sind. Der Speicher im den Computer sichert, daß möglichst wenig Fachwissen nötig ist zum Betreiben der Maschine.

Eine vorteilhafte Ausführungsform der erfindungsgemäßen Reifenprüfvorrichtung ist dadurch gekennzeichnet, daß die Lagereinrichtung eine drehbar gelagerte Außenwelle und eine in der Außenwelle drehbar gelagerte Innenwelle sowie eine lösbare Arretierungseinrichtung umfaßt, die die Außenwelle mit der Innenwelle verbindet, wobei insbesondere die Arretierungseinrrichtung eine Spannhülse zwischen der Außenwelle und der Innenwelle und ein arretierbares Arretierungsrad umfaßt, wobei die Arretierung der Arretierungseinrrichtung durch Drehen der Innenwelle gelöst bzw. festgezogen werden kann. Damit wird auf einfache mechanische Weise ermöglicht, die Welle mit dem Rad in Längsrichtung der Welle zu verschieben, um den gewünschten Abstand zwischen dem Prüfkopf und dem Reifen einzustellen.

Eine vorteilhafte Ausführungsform der Reifenprüfvorrichtung gemäß der Erfindung ist dadurch gekennzeichnet, daß die Führungseinrichtung für den Prüfkopf einen Kurbelantrieb umfaßt, der mechanisch oder hydraulisch oder elektromagnetisch arretierbar ist, wobei der der Kurbelantrieb insbesondere in senkrechter Richtung und senkrecht zu der Längsrichtung der Welle angeordnet ist. Somit ist die einfache und genaue Positionierung des Prüfkopfes möglich, ohne spezifische Fachkenntnis oder Befähigung desjenigen, der die Maschine betreibt.

Dabei ist ferner vorteilhaft, wenn die Führungseinrichtung und der Prüfkopf in einem Gehäuse an der Reifenprüfvorrichtung integriert sind. Diese Ausführungsform der Erfindung hat den Vorteil, daß das eingenommene Volumen der Maschine minimiert ist, und daß der Prüfkopf in gewisser Weise innerhalb des Gehäuses der Radreifenprüfvorrichtung geschützt ist, was ein deutlicher Vorteil ist angesichts der rauhen Umgebung, die in Automobilwerkstätten vorliegt, wo solche Maschine verwendet werden.

Eine vorteilhafte Ausführungsform der Reifenprüfvorrichtung gemäß der Erfindung ist dadurch gekennzeichnet, daß die Abstandseinstelleinrichtung einen mechanischen Taster an dem Prüfkopf umfaßt, welcher Taster beim Erreichen des Testabstandes den Reifen berührt. Dies ist eine mechanische Version der Abstandseinstelleinrichtung, welche einfach auf die rauhe Umgebung angepaßt ist.

Eine vorteilhafte Ausführungsform der erfindungsgemäßen Reifenprüfvorrichtung ist gekennzeichnet durch ein Ventil, welches eingestellt werden kann sowohl bezüglich der Größe dessen Öffnung als auch bezüglich der Öffnungszeit. So ein Ventil-ermöglicht eine schnelle und automatische Einstellung des Reifendruckes unter der Steuerung eines Computers, welcher lediglich die Größe der Ventilöffnung und die Öffnungszeit des Ventiles steuert. Dies zeigt ebenfalls einen Vorteil bezüglich der Minimierung an erforderlicher Zeit zum Durchführen eines vollständigen Testzyklus.

Eine vorteilhafte Ausführungsform der Reifenprüfvorrichtung gemäß der Erfindung ist gekennzeichnet durch eine Haupt- bzw. Zentralsteuereinrichtung zum Steuern des Luftdrukkes in dem Reifen, wobei der Druck in dem Reifen für jeden Testschritt um eine Stufe zu reduzieren ist und zurückgeführt werden muß auf Nominaldruck bei Beendigung eines Testes. Wie bereits oben erwähnt, minimiert dies die erforderliche Zeit zum Durchführen eines vollständigen Testverfahrenszyklus.

Weitere vorteilhafte Ausgestaltungen des erfindungsgemäßen Verfahrens bzw. der erfindungsgemäßen Vorrichtung ergeben sich aus den rechtlichen Unteransprüchen.

Ausführungsbeispiele der Erfindung werden nun anhand der beiliegenden Zeichnungen beschrieben. Es zeigen:
- Fig. 1: schematisch in Draufsicht eine Reifenprüfvorrichtung gemäß einem Ausführungsbeispiel der Erfindung;
- Fig. 2: eine Seitenansicht der Reifenprüfvorrichtung nach Fig. 1;

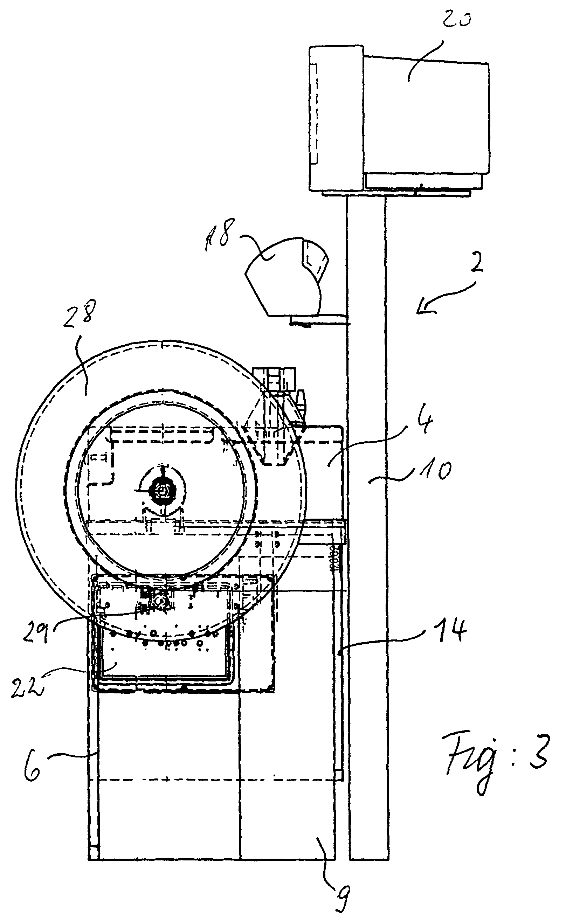

- Fig. 3: eine weitere Seitenansicht der Reifenprüfvorrichtung nach Fig. 1;
- Fig. 4: die Positioniereinrichtung zur Positionierung des Prüfkopfes relativ zu einem Rad auf der Reifenprüfvorrichtung;
- Fig. 5: eine perspektivische Darstellung der Lagereinrichtung für die Welle;
- Fig. 6: einen Schnitt durch die Einrichtung nach Fig. 5;

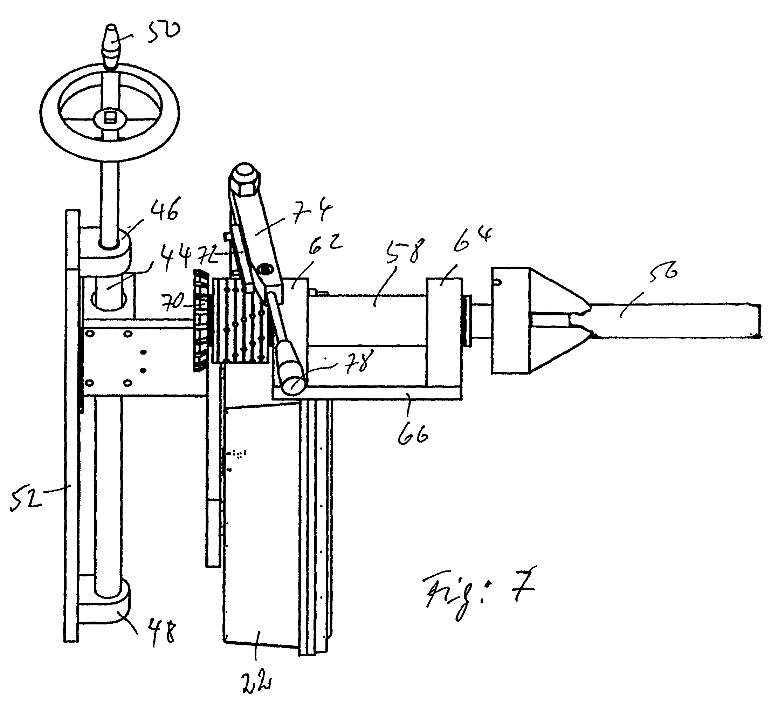

- Fig. 7: eine weitere perspektivische Darstellung der Positioniereinrichtung.

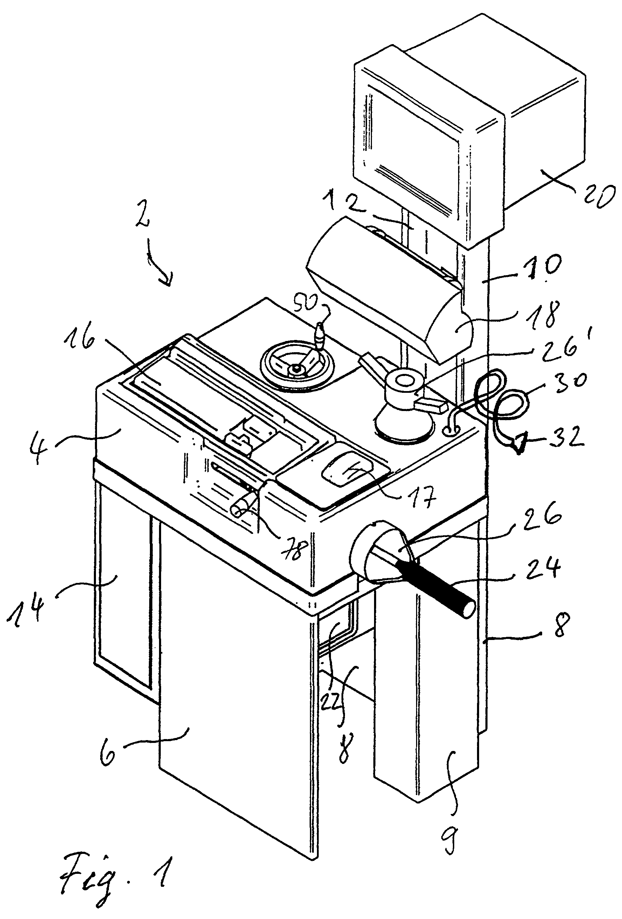

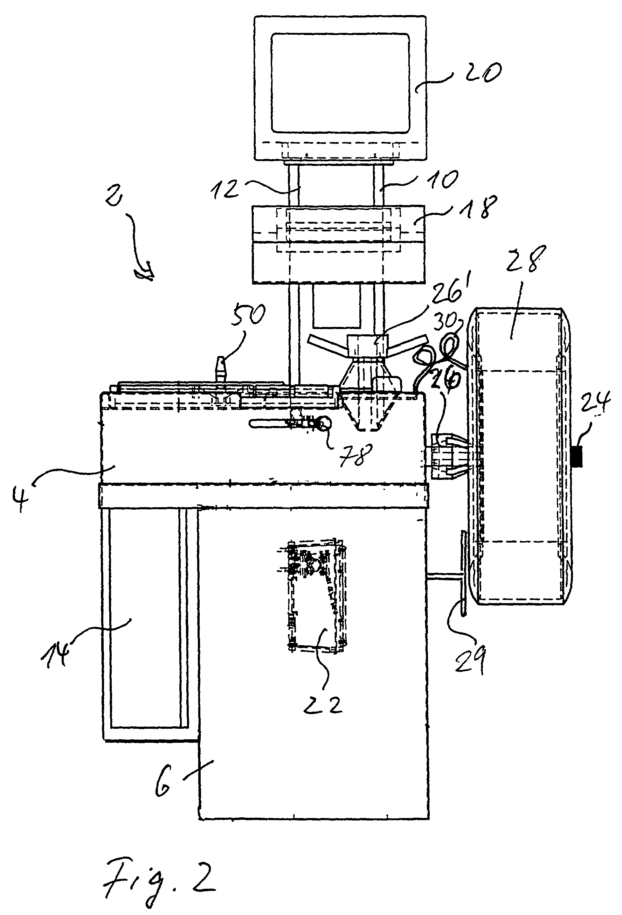

Fig. 1 zeigt eine Reifenprüfvorrichtung mit einem Gehäuse 2, welches aus einer Konsole 4, einer vorderen Gehäusewand 6, einer hinteren Gehäusewand 8, eine Säule 9 und zwei Säulen 10, 12 besteht, und in dem die Hauptkomponenten der Reifenprüfvorrichtung, nämlich ein Rechner 14 mit Tastatur 16, eine "Maus" 17, ein Drucker 18 und ein Monitor 20 angeordnet sind. Im Inneren des Gehäuses ist ein Prüfkopf 22 angeordnet wie in der Perspektive in Fig. 1 und schematisch in Fig. 2 gezeigt ist.

Ferner ist in dem Gehäuse 2 eine Welle 24 gelagert, an der über eine Schnellspanneinrichtung 26, 26' ein Rad 28 befestigt werden kann, wie in Fig. 2 gezeigt ist. In Fig. 1 ist das eine Teil 26 der Schnellspanneinrichtung auf der Welle 24 und das andere Teil 26' der Schnellspanneinrichtung auf der Konsole dargestellt, wo es abgelegt werden kann. Der zusammengebaute Zustand der Schnellspanneinrichtung wird weiter unten beschrieben.

Der Rechner 14 dient als zentrale Recheneinrichtung zur Steuerung der Funktionen der Reifenprüfvorrichtung. Der Rechner hat einen Speicher, in dem eine Tabelle abgelegt ist, die Angaben über die Zahl der Segmente umfaßt, die für die Weiterdrehung eines Rades in Abhängigkeit von der Größe des Rades erforderlich sind. Eine Kamera 29 ist an dem Prüfkopf 22 angeordnet und auf den Reifen 28 gerichtet, wobei das Blickfeld des Prüfkopfes 22 mit der Kamera 29 überwacht wird, indem das von der Kamera 29 aufgenommene Bild an dem Monitor 20 dargestellt wird.

In dem Gehäuse 2 ist auch die Steuereinrichtung für den Luftdruck des zu prüfenden Reifens angeordnet und eine Luftdruckleitung 30 mit einem Ventil 32 ist in Fig. 1 und Fig. 2 dargestellt.

Die in den Fig. 1 und 2 gezeigte Luftdruckeinrichtung mit dem Druckschlauch 30 und dem Ventil 32 dient zur Durchführung der Druckänderungen in dem Reifen des zu prüfenden Rades. Das Ventil 32 ist sowohl bezüglich seiner Öffnung (Abgabemenge pro Zeiteinheit) als auch zum Öffnen und Schließen steuerbar, so daß die Druckänderung im Reifen sowohl über die Ventilöffnung als auch über die Zeitdauer steuerbar ist, in der das Ventil geöffnet ist.

Bei dem Ausführungsbeispiel von Fig. 2 wird die Abstandsbestimmung zwischen dem Prüfkopf 22 und der Seitenwand des Reifens auf dem Rad 28 durch einen Taster 29 verwirklicht, der an dem Gehäuse 2 schwenkbar befestigt ist. Wenn das Rad sich auf der richtigen Entfernung zum Prüfkopf 22 befindet, greift der Taster 29 an dem Reifen an, und die Einstellung des Rades in Längsrichtung der Welle 24 ist damit abgeschlossen.

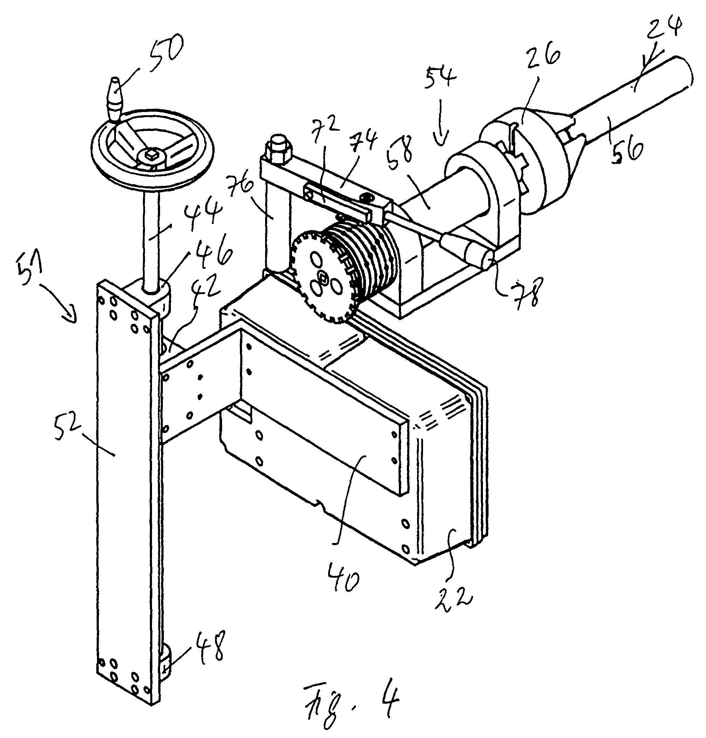

In Fig. 4 ist die Positioniereinrichtung perspektivisch dargestellt, mit deren Hilfe der Abstand zwischen dem Prüfkopf 22 und dem Reifen von einem auf der Welle 24 montiertem Rad und die senkrechte Position des Prüfkopfes 22 gegenüber dem Reifen des Rades 28 einstellbar ist.

Der Prüfkopf 22 ist an einem Winkel 40 montiert, der seinerseits an einem Schlitten 42 befestigt ist, der über eine Gewindewelle 44, die in Lagern 46, 48 gelagert ist, mit Hilfe einer Kurbel 50 auf und ab, das heißt senkrecht zur Längsrichtung der Welle 24 bewegt werden kann. Die Führungseinrichtung für den Prüfkopf umfaßt somit einen Kurbelantrieb 51, der mechanisch oder hydraulisch oder elektromagnetisch arretierbar ist. Der Kurbelantrieb 51 ist in senkrechter Richtung und senkrecht zu der Längsrichtung der Welle 24 angeordnet. Der Kurbelantrieb 51 und der Prüfkopf 22 sind in dem Gehäuse der Radreifenprüfvorrichtung integriert. Die Lager 46, 48 sind über eine Grundplatte 52 im Inneren des Gehäuses 2 mit diesem verbunden.

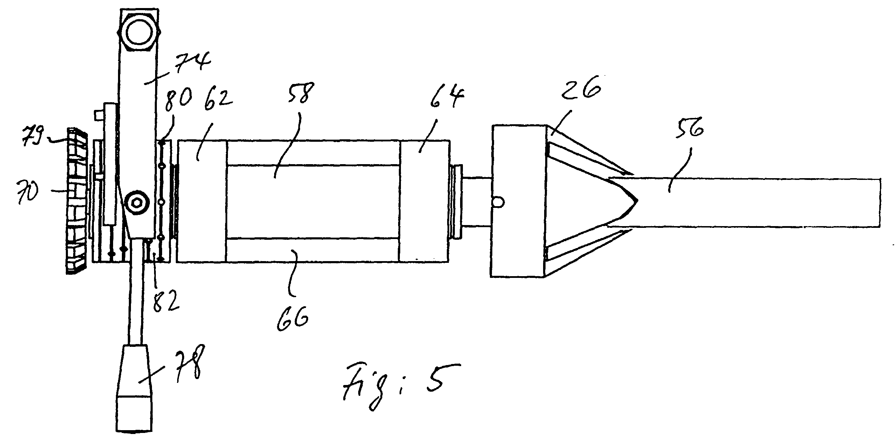

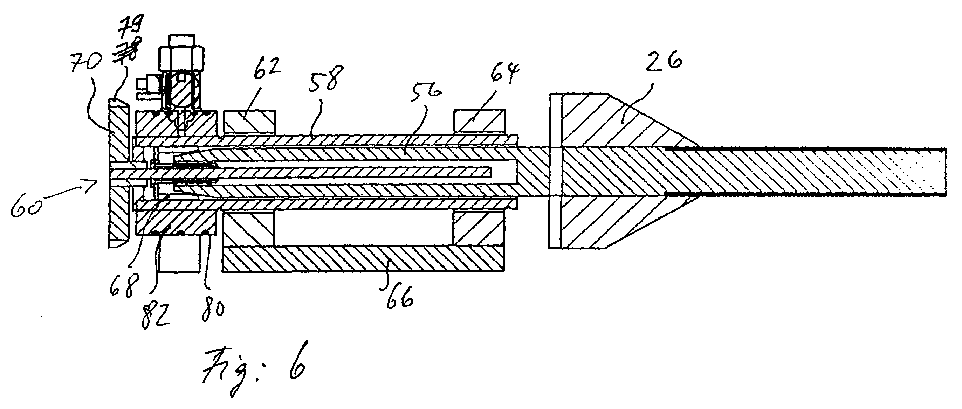

Das Rad mit der Welle 24 wird in Längsrichtung der Welle verschiebbar durch eine Lagereinrichtung 54 gelagert, die perspektivisch in Fig. 4, in Draufsicht in Fig. 5 und von dem Schnitt in Fig. 6 gezeigt ist. Die Lagereinrichtung 54 umfaßt eine drehbar gelagerte Außenwelle 58 und eine in der Außenwelle 58 drehbar gelagerte Innenwelle 56 sowie eine lößbare Arretierungseinrichtung 60, die die Außenwelle 58 mit der Innenwelle 56 verbindet. Wie aus den Fig. 4 bis 6 zu ersehen ist, ist die Außenwelle 58 auf zwei Lagern 62, 64 gelagert, die über eine Grundplatte 66 in dem Gehäuse 2 befestigt sind.

Die Arretierungseinrichtung 60 weist eine Spannhülse 68 auf, die die Außenwelle 58 mit der Innenwelle drehfest verbindet, wenn die Spannhülse angezogen ist. Um die Arretierung zu lösen, wird die Außenwelle, die mit einem Arretierungsrad 70 verbunden ist, festgehalten, indem das Arretierungsrad 70 arretiert wird. Dann wird die Innenwelle in einer ersten Drehrichtung gedreht, um die Spannhülse 68 zu lösen. In diesem Zstand kann die Innenwelle 56 gegenüber der Außenwelle 58 in Längsrichtung der Wellen verstellt werden, um den Abstand zwischen dem Reifen und dem Prüfkopf einzustellen. Wenn die Innenwelle 56 in der entgegengesetzten Richtung gedreht wird, wird die Spannhülse 68 wieder angezogen und eine drehfeste Verbindung zwischen den beiden Wellen hergestellt. Wenn das Arretierungsrad 70 wieder freigegeben wird, kann die Welle mit dem Rad wieder frei gedreht werden.

Die Arretierung des Arretierungsrades 70 erfolgt über einen federnd vorgespannten Finger 72, der an einem Hebel 74 befestigt ist, der schwenkbar auf einer Säule 76 befestigt ist. Der Hebel 74 kann mit einem Handgriff 78 nach links in Fig. 4 geschwenkt werden, daß der Arretierungsfinger 72 in entsprechende Aussparungen 79 an dem Arretierungsrad 70 eingreifen, um das Arretierungsrad und damit die Außenwelle 58 festzulegen.

An dem Hebel 74 ist, wie in Fig. 6 dargestellt ist, ein federnd vorbelasteter Nocken vorgesehen, der in Indexvertiefungen 80 an Stellringen 82 angreift. Mit dem Hebel 78 kann der Nocken auf verschiedene Indexringe eingestellt werden, so daß die Drehung der Welle 24 nach jedem Prüfsegment arretiert wird in Abhängigkeit von der Größe des Reifens. An der Stelle, an der der Handgriff 78 aus dem Gehäuse hervorsteht, sind Markierungen angebracht, und der Rechner zeigt über den Monitor an, welche Markierung von dem Hebel 78 einzustellen ist, sobald dem Rechner eingegeben wurde, welcher Reifen nun geprüft werden soll.

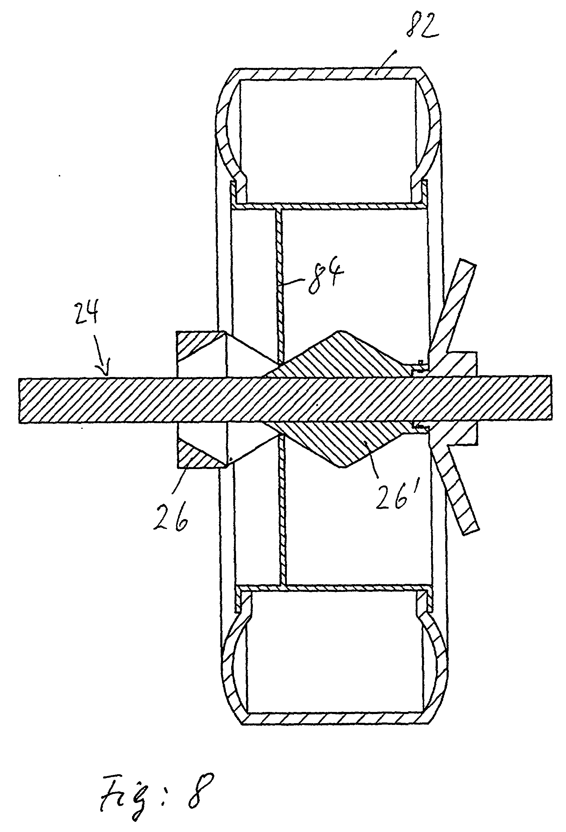

Fig. 8 zeigt einen Schnitt durch die Schnellspanneinrichtung und das Rad. Das Rad 28 hat einen Reifen 82 und eine Felge 84, die zwischen den beiden Teilen 26 und 26' der Schnellspanneinrichtung aufgenommen wird. Die Schnellspanneinrichtung wird dadurch festgezogen, daß das Rad auf den Teil 26 der Schnellspanneinrichtung aufgesetzt und der Tel 26' auf die Welle 24 geschraubt wird, so daß die Felge zwischen den beiden Teilen 26, 26' eingeklemmt wird.

## Patentansprüche

1. Reifenprüfverfahren, bei dem vor und nach einer Änderung im Reifendruck mit kohärenter Strahlung jeweils ein Interferogramm der Reifenoberfläche erzeugt wird und durch einen Rechner (14) aus dem Interferogramm die Informationen über vorhandene Defekte des Reifens (28) gewonnen werden, wobei
(a) zur Prüfung eines Reifens (28) das Rad, das den zu prüfenden Reifen aufweist, auf einer dregbaren Welle (24) einer Reifenprüfvorrichtung (2) montiert wird, daß
(b) der Abstand des Reifens (28) von dem Prüfkopf (22) dadurch eingestellt wird, daß das Rad mit der Welle (24) in Längsrichtung der Welle verschoben und die Welle (24) dann in Bezug auf ihre Bewegung in Längsdrichtung der Welle (24) arretiert wird, daß
(c) die relative Lage des Prüfkopfes (22) zu dem Reifen (28) dadurch eingestellt wird, daß der Prüfkopf (22) in radialer Richtung des Rades bewegt wird, um den Prüfkopf (22) für unterschiedlich große Reifen (28) in Position zu bringen, daß
(d) das Rad dann von Hand um den Betrag eines Prüfsegmentes weitergedreht und mechanisch arretiert wird, wenn das nächste Segment sich in Prüfposition vor dem Prüfkopf (22) befindet, daß
(e) daß die Überprüfung auf Defekte auf einem ersten Prüfsegment des Reifens (28) vorgenommen wird, und daß
(f) die Schritte d) und e) wiederholt werden, bis der gesamte Reifen (28) geprüft ist.

2. Verfahren nach Anspruch 1, **dadurch gekennzeichnet, daß** die relative Lage des Prüfkopfes (22) zu dem Reifen (28) dadurch eingestellt wird, daß der Prüfkopf (22) in sektrechter Richtung und senkrecht zu der Längsrichtung der Welle (24) bewegt wird.

3. Verfahren nach Anspruch 1, **dadurch gekennzeichnet, daß** das Blickfeld des Prüfkopfes (22) mit einer Kamera (29) überwacht wird, die an dem Prüfkopf (22) angeordnet und auf den Reifen (28) gerichtet ist, wobei das von der Kamera (29) aufgenommene Bild an dem Monitor (20) dargestellt wird.

4. Verfahren nach Anspruch 1, **dadurch gekennzeichnet, daß** die für die Weiterdrehung des Rades erforderlichen Größen, beispielsweise die Reifengröße, in den Rechner (14) eingegeben wird, und daß die Zahl der erforderlichen Segmente von dem Rechner (14) ausgegeben wird.

5. Verfahren nach Anspruch 4, **dadurch gekennzeichnet, daß** die Zahl der erforderlichen Segmente an der Welle (24) eingestellt wird.

6. Verfahren nach Anspruch 1, **dadurch gekennzeichnet, daß** bei dem Einstellen des Abstandes zwischen dem Prüfkopf (22) und dem Reifen (28) dieser Abstand überwacht und eine Anzeige gegeben wird, wenn der Prüfkopf (22) den Sollabstand erreicht hat, und daß der Prüfkopf (22) dann arretiert wird.

7. Verfahren nach Anspruch 1, **dadurch gekennzeichnet, daß** der Reifendruck bei jedem Prüfschritt um eine Stufe herabgesetzt und nach abgeschlossener Prüfung wieder auf den Nenndruck gebracht wird.

8. Reifenprüfvorrichtung zur Durchführung des Verfahrens nach Anspruch 1, mit einer Luftdruckeinrichtung zur Änderung des Reifendrucks sowie einem Prüfkopf (22) und einem Rechner (14), die vor und nach einer Änderung im Luftdruck mit kohärenter Strahlung jeweils ein Interferogramm der Reifenoberfläche erzeugen und aus dem Interferogramm die Informationen über vorhandene Defekte des Reifens (28) ermitteln, umfassend:
- eine dregbar gelagerte Welle (24), auf der das Rad mit dem zu prüfenden Reifen (28) zu montieren ist, durch
- eine Lagereinrichtung (54), durch die das Rad mit der Welle (22) in Längsrichtung der Welle zu verschieben ist, durch
- eine Wellen-Arretierungseinrichtung (80), durch die die Welle (22) dann in Bezug auf ihre Bewegung in Längsdrichtung der Welle (22) zu arretieren ist, durch
- eine Führungseinrichtung (51), durch die der Prüfkopf in radialer Richtung des Rades (28) zu bewegen ist, durch
- eine Rad-Arretierungseinrichtung (70), durch die das Rad mechanisch zu arretieren ist, wenn das Rad von Hand um den Betrag eines Prüfsegmentes weitergedreht ist und wenn das nächste Segment sich in Prüfposition vor dem Prüfkopf befindet, und durch
- eine Starteinrichtung (16, 17), durch die die Überprüfung auf Defekte auf einem ersten Prüfsegment des Reifens (28) gestartet wird.

9. Vorrichtung nach Anspruch 8, **dadurch gekennzeichnet, daß** der Rechner (14) einen Speicher aufweist, in dem eine Tabelle abgelegt ist; die Angaben über die Zahl der Segmente umfaßt, die für die Weiterdrehung eines Rades in Abhängigkeit von der Größe des Rades erforderlich sind.

10. Vorrichtung nach Anspruch 8, **dadurch gekennzeichnet, daß** die Lagereinrichtung eine drehbar gelagerte Außenwelle (58) und eine in der Außenwelle drehbar gelagerte Innenwelle (56) sowie eine lösbare Arretierungseinrichtung (68) umfaßt, die die Außenwelle (58) mit der Innenwelle (56) verbindet.

11. Vorrichtung nach Anspruch 8, **dadurch gekennzeichnet, daß** die Arretierungseinrrichtung (68) eine Spannhülse zwischen der Außenwelle (58) und der Innenwelle (56) und ein arretierbares Arretierungsrad (70) umfaßt, wobei die Arretierung der Arretierungseinrrichtung (68) durch Drehen der Innenwelle (56) gelöst bzw. festgezogen werden kann.

12. Vorrichtung nach einem der Ansprüche 8 bis 11, **dadurch gekennzeichnet, daß** die Führungseinrichtung (51) für den Prüfkopf (22) einen Kurbelantrieb umfaßt, der mechanisch oder hydraulisch oder elektromagnetisch arretierbar ist.

13. Vorrichtung nach einem der Ansprüche 8 bis 12, **dadurch gekennzeichnet, daß** der Kurbelantrieb (51) in senkrechter Richtung und senkrecht zu der Längsrichtung der Welle (22) angeordnet ist.

14. Vorrichtung nach einem der Ansprüche 8 bis 13, **dadurch gekennzeichnet, daß** die Führungseinrichtung (51) und der Prüfkopf (22) in dem Gehäuse der Radreifenprüfvorrichtung (2) integriert sind.

15. Vorrichtung nach Anspruch 8, **gekennzeichnet durch** eine Kamera (29), die an dem Prüfkopf (22) angeordnet und auf den Reifen (28) gerichtet ist, wobei das Blickfeld des Prüfkopfes (22) mit der Kamera (29) überwacht wird, indem das von der Kamera (29) aufgenommene Bild an dem Monitor (20) dargestellt wird.

16. Vorrichtung nach Anspruch 8, **dadurch gekennzeichnet, daß** die Radarretierungseinrichtung mehrere auf der Außenwelle (58) angeordnete Indexscheiben (82) mit Indexvertiefungen (80) aufweist, deren Zahl eine unterschiedlichen Zahl von Prüfsegmenten entspricht, und daß ein Hebel (74) mit einem Nocken (72) vorgesehen ist, der mit dem Nocken (72) in die Indexvertiefungen (80) eingreift.

17. Vorrichtung nach Anspruch 8, **gekennzeichnet durch** eine Abstands-Einstellvorrichtung (29), um den Abstand zwischen dem Prüfkopf (22) und dem Reifen (28) einzustellen.

18. Vorrichtung nach Anspruch 17, **dadurch gekennzeichnet, daß** die Abstands-Einstellvorrichtung (29) einen mechanischen Taster an dem Prüfkopf (22) aufweist, der bei Erreichen des Prüfabstandes an dem Reifen (28) angreift.

19. Vorrichtung nach Anspruch 8, **gekennzeichnet durch** ein Ventil (32) das sowohl in Bezug auf die Größe seiner Öffnung als auch in Bezug auf seine Öffnungszeit steuerbar ist.

20. Vorrichtung nach Anspruch 19, **gekennzeichnet durch** eine zentrale Steuereinrichtung zum Steuern des Luftdruckes im Reifen (28), wobei der Reifendruck bei jedem Prüfschritt um eine Stufe herabzusetzen und nach abgeschlossener Prüfung wieder auf den Nenndruck zu bringen ist.

## Claims

1. A method of testing tires, wherein before and after an alteration in the tire pressure a respective interferogram is produced of the tire surface using coherent radiation and, from the interferogram, the information concerning any defects present in the tire is obtained by a computer (14), **characterized in that** for testing the tire (28) on a motor vehicle
(a) for testing a tire (28), the wheel which has the tire to be tested, is mounted on a rotatable shaft (24) of a tire testing machine (2),
(b) the distance of the tire (28) from the test head (22) is adjusted thereby that the wheel is shifted together with the shaft (24) in the direction of the shaft (24), and that the shaft (24) is locked thereafter,
(c) the relative location of the test head (22) with respect to the tire (28) is adjusted thereby that the test head (22) is, in order to bring it into position for differently sized tires (28), moved in a vertical direction,
(d) the wheel is, thereafter, rotated further on by the amount of a testing segment by hand and locked mechanically when the next segment is in a test position in front of the test head (22),
(e) the testing as to defects is carried on a first testing segment of the tire (28), and
(f) the steps (d) and (e) are repeated until the complete tire (28) has been tested.

2. The method as claimed in claim 1, **characterized in that** the relative position of the test head (22) with respect to the tire (28) is adjusted thereby that the test head (22) is moved in a vertical direction and perpendicular to the longitudinal direction of the shaft (24).

3. The method as claimed in claim 1, **characterized in that** the field of view of the test head (22) is inspected by means of a camera (29) which is arranged in the test head (22) and is directed to the tire (28) whereby the picture taken by the camera (29) is shown on a monitor (20).

4. The method as claimed in claim 1, **characterized in that** the values necessary for the further rotation of the wheel, for example the tire size, are input into a computer (14), and the computer (14) issues an information about the number of segments which are required in order to test the complete tire.

5. The method as claimed in claim 4, **characterized in that** the number of the required segments is adjusted at the shaft (24).

6. The method as claimed in claim 1, **characterized in that** upon adjustment of the distance between the test head (22) and the tire (28), this distance is watched and an indication is given when the test head (22) has reached the desired distance, and that the test head (22) is, thereafter, locked.

7. The method as claimed in claim 1, **characterized in that** the pressure of the tire is reduced for each test step, whereby, after completing the tests, the pressure is adjusted back to the nominal pressure.

8. A tire testing apparatus for the performance of the method as claimed in claim 1, comprising an air pressure means for altering the tire pressure, a test head (22) and a computer (14), which before and after an alteration in the air pressure, using coherent radiation, produce a respective interferogram of the tire surface and , from the interferogram, derive the information concerning any defects in the tire (28), **characterized by**
- a rotatably supported shaft (24) on which the wheel with the tire (28) to be tested is mounted, by
- a bearing device (54) by which the wheel with the shaft (22) is shiftable in longitudinal direction of the shaft, by
- a shaft locking device (80) by which the shaft (22) is locked with respect to a movement in the longitudinal direction of the shaft (22) thereafter, by
- a guiding device (51) by which the test head is moved in a radial direction of the wheel (28), by
- a wheel locking device (70) by which the wheel is mechanically locked when the wheel is further rotated by hand by an amount of a test segment and when the next segment is in test position in front of the test head, and by
- a starting device (16, 17) by which the testing on defects of a first test segments of the tire (28) is started.

9. The apparatus as claimed in claim 8, **characterized in that** the computer (14) the computer comprises a storage in which a table is stored which contains data as to the number of segments which are required for rotating on the wheel in dependence of the size of the wheel.

10. The apparatus as claimed in claim 8, **characterized in that** the bearing device comprises a rotatably supported outer shaft (58) and an inner shaft (56) rotatably supported within the outer shaft (58) as well as an unlockable locking device (68) connecting the outer shaft (58) to the inner shaft (56).

11. The apparatus as claimed in claim 8, **characterized in that** the locking device (68) comprises a clamping hub between the outer shaft (58) and the inner shaft (56) and a lockable locking wheel (70), whereby the locking of the locking device (68) may be loosened or tightened by rotating the inner shaft (56).

12. The apparatus as claimed in claim 8, **characterized in that** the guiding device (51) for the test head (22) comprises a crank drive which is mechanically or hydraulically or electromagnetically lockable.

13. The apparatus as claimed in claim 8, **characterized in that** the crank drive (51) is arranged in a vertical direction and perpendicular to the longitudinal direction of the shaft (22).

14. The apparatus as claimed in claim 8, **characterized in that** the guiding device (51) and the test head (22) are integrated into a housing on the tire testing apparatus (2).

15. The apparatus as claimed in claim 8, **characterized by** a camera (29) which is arranged in the test head (22) and which is directed to the tire (28), whereby the field of view of the test head (22) is inspected by means of the camera (29) by displaying the picture taken from the camera (29) on the monitor (20).

16. The apparatus as claimed in claim 8, **characterized in that** the wheel locking device comprises index discs (82) arranged on the outer shaft (58) having index recesses (80) the number of which corresponds to a different number of test segments, and that a lever (74) with a cam (72) is provided which engages the index recesses (80) with the cam (72).

17. The apparatus as claimed in claim 8, **characterized by** a distance setting device (29) for setting the distance between the test head (22) and the tire (28).

18. The apparatus as claimed in claim 17, **characterized in that** that the distance adjusting device (29) comprises a mechanical keying device on the test head (22) which keying device touches the tire (28) upon reaching the test distance.

19. The apparatus as claimed in claim 8, **characterized in that** a valve (32) which may be adjusted with respect to the size of its opening as well as with respect to the opening time duration.

20. The apparatus as claimed in claim 19, **characterized in that** a main or central control device for controlling the air pressure in the tire (28) whereby the pressure in the tire is to be reduced for each test step by one step and has to be brought back to the nominal pressure upon termination of a test.

## Revendications

1. Procédé de vérification des pneus, par lequel un interférogramme des surfaces des pneus est produit à chaque fois avant et après un changement de la pression des pneus avec un rayonnement cohérent ; cet interférogramme permettant d'obtenir des informations sur les défauts existant grâce à un calculateur (14) ; où
a) pour vérifier un pneu (28), la roue qui comprend le pneu à vérifier est montée sur un arbre, susceptible d'être tourné, d'un dispositif de vérification des pneus,
b) la distance des pneus (28) de la tête de vérification (22) est réglée de sorte que la roue avec l'arbre (24) soit déplacée en direction longitudinale de l'arbre et que l'arbre soit arrêté en fonction de son mouvement en direction longitudinale de l'arbre,
c) la position relative de la tête de vérification (22) par rapport au pneu (28) est réglée de sorte que la tête de vérification (22) soit déplacée en direction radiale de la roue afin d'amener en position la tête de vérification (22) pour des pneus (28) de tailles différentes,
d) la roue est alors tournée d'un montant de segment de vérification et est arrêtée mécaniquement lorsque le prochain segment se trouve en position de vérification avant la tête de vérification (22),
e) la vérification des défauts est effectuée sur un premier segment de vérification du pneu (28) et où
f) les étapes d) et e) sont répétées jusqu'à ce que le pneu (28) entier ait été vérifié.

2. Procédé selon la revendication 1, **caractérisé en ce que** la position relative de la tête de vérification (22) est réglée par rapport au pneu (28) de sorte que la tête de vérification (22) soit déplacée en direction perpendiculaire et de manière perpendiculaire par rapport à la direction longitudinale de l'arbre (24).

3. Procédé selon la revendication 1, **caractérisé en ce que** le champ de vision de la tête de vérification (22) est surveillé par une caméra (29) qui est disposée sur la tête de vérification et est orientée vers le pneu (28) ; l'image prise par la caméra étant représentée sur un moniteur (20).

4. Procédé selon la revendication 1, **caractérisé en ce que** les valeurs nécessaires pour que la roue continue de tourner, par exemple , la taille du pneu, soient rentrées dans le calculateur (14) et que le nombre des segments nécessaires soient émis par le calculateur (14).

5. Procédé selon la revendication 4, **caractérisé en ce que** le nombre des segments nécessaires est réglé sur l'arbre (24).

6. Procédé selon la revendication 1, **caractérisé en ce que**, lors du réglage de la distance entre la tête de vérification (22) et le pneu (28), cette distance est surveillée et un signal est délivré lorsque la tête de vérification (22) a atteint la distance nécessaire , et **caractérisé en ce que** la tête de vérification peut alors être arrêtée.

7. Procédé selon la revendication 1, **caractérisé en ce que** la pression du pneu est abaissée d'un cran lors de chaque étape de vérification et est amenée après la fin de chaque vérification à nouveau à la pression nominale .

8. Dispositif de vérification de pneus pour la réalisation du procédé selon la revendication 1, avec un dispositif à air comprimé pour modifier la pression du pneu ainsi qu'une tête de vérification (22) et un calculateur (14) qui produisent à chaque fois un interférogramme des surfaces de pneu avant et après le changement de la pression de l'air par un rayonnement cohérent et qui déterminent à partir de l'interférogramme, les informations sur les défauts existant du pneu (28), comprenant :
- un arbre (24) logé de façon rotative sur lequel est monté la roue avec le pneu (28) à vérifier,
- un dispositif de logement (54) grâce auquel la roue avec l'arbre (22) peut être déplacée en direction longitudinale de l'arbre ,
- un dispositif d'arrêt de l'arbre (80) grâce auquel l'arbre (22) peut être arrêté en direction longitudinale de l'arbre selon son mouvement,
- un dispositif de guidage (51) grâce auquel la tête de vérification peut être déplacée en direction radiale de la roue (28),
- un dispositif d'arrêt de la roue (70) grâce auquel on peut arrêter la roue mécaniquement lorsqu'on continue de tourner la roue d'un segment de vérification et lorsque le prochain segment se trouve en position de vérification avant la tête de vérification,
- un dispositif de démarrage (16, 17) grâce auquel on démarre la vérification des défauts sur un premier segment du pneu.

9. Dispositif selon la revendication 8, **caractérisé en ce que** le calculateur (14) comporte une mémoire dans laquelle est disposée un tableau qui comporte des données sur le nombre des segments nécessaires pour continuer à tourner une roue en fonction de la taille de la roue.

10. Dispositif selon la revendication 8, **caractérisé en ce que** le dispositif de logement comprend un arbre extérieur (58) logé de façon rotative et un arbre intérieur (56) logé de façon rotative dans l'arbre extérieur ainsi qu'un dispositif d'arrêt susceptible d'être desserré qui relie l'arbre extérieur (58) à l'arbre intérieur ( 56).

11. Dispositif selon la revendication 8, **caractérisé en ce que** le dispositif d'arrêt (68) comprend une douille de serrage entre l'arbre extérieur (58) et l'arbre intérieur 56) et une roue d'arrêt (70) susceptible d'être arrêtée, où l'arrêt du dispositif d'arrêt (68) peut être desserré ou serré en tournant l'arbre intérieur (56).

12. Dispositif selon une des revendications 8 à 11, **caractérisé en ce que** le dispositif de guidage (51) comprend un entraînement à manivelle pour une tête de vérification (22) qui peut être arrêté mécaniquement ou de façon électromagnétique.

13. Dispositif selon une des revendications 8 à 12, **caractérisé en ce que** l'entraînement à manivelle (51) est disposé dans une direction perpendiculaire et de façon perpendiculaire par rapport à la direction longitudinale de l'arbre (22).

14. Dispositif selon une des revendications 8 à 13, **caractérisé en ce que** le dispositif de guidage (51) et la tête de vérification (22) sont intégrés dans le boîtier du dispositif de vérification de pneus.

15. Dispositif selon la revendication 8, **caractérisé par** une caméra (29) ) qui est disposée sur la tête de vérification et est orientée vers le pneu (28) ; le champ de vision de la tête de vérification (22) étant surveillé par une caméra (29) et l'image prise par la caméra étant représentée sur le moniteur (20).

16. Dispositif selon la revendication 8, **caractérisé en ce que** le dispositif d'arrêt de pneu comprend plusieurs disques indexés (82) avec des creux d'index (80) disposés sur l'arbre extérieur ; le nombre de creux correspondant à un nombre différents de segments de vérification, et **en ce qu'**un levier (74) avec une came (72) est prévue, lequel levier s'introduit avec la came (72) dans les creux d'index .

17. Dispositif selon la revendication 8, **caractérisé par** un dispositif de réglage de distance (29) pour régler la distance entre la tête de vérification (22) et le pneu (28).

18. Dispositif selon la revendication 17, **caractérisé en ce que** le dispositif de réglage de distance (29) comporte un palpeur mécanique sur la tête de vérification (22) qui touche le pneu lorsque la distance de vérification est atteinte.

19. Dispositif selon la revendication 8, **caractérisé par** une valve (32) qui peut être commandée par rapport à la taille et la durée de l'ouverture de valve.

20. Dispositif selon la revendication 19, **caractérisé par** un dispositif de commande central pour commander la pression de l'air dans le pneu (28) ; la pression du pneu étant abaissée d'un cran lors de chaque étape de vérification et étant amenée, après la fin de chaque vérification, à nouveau à la pression nominale.
